# EUROPÄISCHE PATENTSCHRIFT

(11) **EP 2 076 327 B1**
(45) Veröffentlichungstag und Bekanntmachung des Hinweises auf die Patenterteilung: **23.07.2014**
(21) Anmeldenummer: 07802583.0
(22) Anmeldetag: 13.08.2007
(51) Int. Cl.: B01D 53/79, F01N 3/20

(54) **VERFAHREN ZUM BETRIEB EINER VERBRENNUNGSKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 04.10.2006 DE 102006046900
(43) Veröffentlichungstag der Anmeldung: 08.07.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/058345
(87) Internationale Veröffentlichungsnummer: WO 2008/040592

(56) Entgegenhaltungen:
- EP-A- 1 388 648
- EP-A- 1 561 016
- US-A- 5 884 475

## Beschreibung

### Stand der Technik

Die Erfindung betrifft ein Verfahren zum Betrieb einer Verbrennungskraftmaschine gemäß dem Oberbegriff des Anspruchs 1.

Bei Verbrennungskraftmaschinen, insbesondere bei dieselbetrievenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion durchgeführt, bei der die Stickoxide mit Hilfe von flüssigen Reduktionsmitteln zu Stickstoff und Wasser reduziert werden. Als flüssiges Reduktionsmittel wird zum Beispiel eine wässrige Härnstofflösung eingesetzt.

Das flüssige Reduktionsmittel wird üblicherweise in einem Tank gelagert und über eine Leitung vom Tank zu einem Dosiermodul befördert, mit dem das flüssige Reduktionsmittel zum Beispiel in das Abgasrohr eingespritzt wird.

Die derzeit eingesetzten üblichen flüssigen Reduktionsmittel gefrieren je nach zugesetztem Anti-Frostmittel bei einer Temperatur im Bereich von -11 °C bis -40 °C. Um den Anforderungen an die Abgaszusammensetzung genügen zu können, muss gewährleistet werden, dass auch bei Temperaturen unterhalb von -11 °C nach einer akzeptablen Zeit ausreichend Reduktionsmittel bereitsteht. Dies macht es unter Umständen erforderlich, das Reduktionsmittel aufzutauen. Bei Nutzkraftfahrzeugen wird zum Beispiel eine zuschaltbare Beheizung eingesetzt, die über das Kühlwasser der Verbrennungskraftmaschine betrieben wird. Diese zuschaltbare Beheizung ist in der Lage, den Inhalt des gesamten Tanks aufzutauen.

Da jedoch zum Beispiel bei Personenkraftwagen die Verbrennungskraftmaschine und der Tank für das flüssige Reduktionsmittel im Allgemeinen räumlich weit voneinander getrennt liegen, ist eine Beheizung des Tanks für das Reduktionsmittel mit Hilfe des Kühlwassers der Verbrennungskraftmaschine schwierig. Aus diesem Grund wird bei Personenkraftwagen ein begrenztes Volumen des Tanks, welches in einem Teilbehälter im Tank aufgenommen ist, elektrisch aufgeheizt. Bei den derzeit eingesetzten Tanks für das flüssige Reduktionsmittel können mit diesem aufgetauten Volumen bis zu 1000 km zurückgelegt werden. In gemäßigten Klimazonen wird dieses aufgetaute Teilvolumen in Verbindung mit dem Einsatz von mit Frostschutzmittel additivierten Reduktionsmitteln als ausreichend betrachtet, um einen stetigen Betrieb gewährleisten zu können. Hierbei wird auch berücksichtigt, dass das Durchfrieren des Reduktionsmittels im Tank in Verbindung mit einer gezielten Isolation und einem gerichteten Einfrieren mehrere Tage benötigen kann.

Dokument EP 1 388 648 offenbart eine Vorrichtung umfassend einen Reduktionsmitteltank und ein Reservoir. Dabei wird zunächst der Inhalt des Reservoirs aufgetaut und später, wenn der Reduktionsmitteltank über den warmen Dieselkraftstoff aufgewärmt wurde, wird das Reservoir wieder aufgefüllt. Der Reduktionsmitteltank befindet sich in einem Tank für Dieselkraftstoff.

Gebrauchsmusterschrift DE 20 2006 010 615 zeigt auch ein modulares Tanksystem mit einem Haupttank und einem Schmelztank am Boden angeordnet. Im Unterschied zum Innenbehälter umfasst der Schmelztank ein Heizelement an der Außenseite des Schmelztankmantels.

Aus EP-B 1 561 016 ist ein Verfahren zur Nachbehandlung des Abgases einer Verbrennungskraftmaschine bekannt, bei dem ein flüssiges Reduktionsmittel als Hilfsmittel zur Behandlung verwendet wird. Wenn die Temperatur des flüssigen Reduktionsmittels einen kritischen Wert unterschreitet, wird eine teilweise chemische Umwandlung des Reduktionsmittels in einen den Gefrierpunkt des Reduktionsmittels absenkenden Stoff angeregt.

Nachteil aller aus dem Stand der Technik bekannten Verfahren ist, dass mit diesen Verfahren ein stetiger Betrieb nur in gemäßigten Klimazonen möglich ist. Wenn die Temperaturen jedoch längere Zeit unterhalb der Erstarrungstemperatur des Reduktionsmittels liegen, ist mit diesen Verfahren ein Auftauen des Reduktionsmittels im gesamten Tank nicht mehr möglich.

### Offenbarung der Erfindung

Bei dem erfindungsgemäßen Verfahren zum Betrieb einer Verbrennungskraftmaschine umfasst diese eine Vorrichtung, in welcher Stickoxide, die durch die Verbrennung von Kraftstoff in der Verbrennungskraftmaschine entstanden sind, in Gegenwart eines flüssigen Reduktionsmittels zu Stickstoff und Wasser reduziert werden. Das flüssige Reduktionsmittel ist in einem Tank, der einen Innenbehälter und einen Außenbehälter umfasst, bevorratet. Wenn das Reduktionsmittel erstarrt ist, z.B. bei Außentemperaturen, die unterhalb der Erstarrungstemperatur des Reduktionsmittels liegen, wird das Reduktionsmittel im Innenbehälter durch ein erstes Heizelement geschmolzen. Das Reduktionsmittel im Außenbehälter wird in vorgegebenen Zeitintervallen durch ein zweites Heizelement geschmolzen und der Innenbehälter wird mit dem geschmolzenen Reduktionsmittel aus dem Außenbehälter befüllt.

Vorteil des erfindungsgemäßen Verfahrens ist, dass mit diesem Verfahren ein Betrieb der Verbrennungskraftmaschine auch in Klimazonen mit extrem tiefen Umgebungstemperaturen unbegrenzt möglich ist. Das im Innenbehälter enthaltene Volumen kann durch das erste Heizelement innerhalb kurzer Zeit elektrisch aufgetaut werden. Bei Einsatz des Verfahrens in Kraftfahrzeugen wird das Volumen des Innenbehälters vorzugsweise so gewählt, dass damit zum Beispiel eine Reichweite von ungefähr 1000 km ermöglicht wird. Sobald der Flüssigkeitsstand im Innenbehälter einen minimalen Wert erreicht, wird mit dem zweiten Heizelement das Reduktionsmittel im Außenbehälter aufgetaut. Anschließend wird aus dem Außenbehälter wieder Reduktionsmittel in den Innenbehälter befüllt, so dass erneut ein Betrieb der Verbrennungskraftmaschine möglich ist.

In einer bevorzugten Ausführungsform wird die Energie, die zum Betrieb des ersten Heizelementes benötigt wird, durch die Verbrennungskraftmaschine bereitgestellt. Hierdurch wird ein autarker Betrieb der Verbrennungskraftmaschine ermöglicht. Bei Einsatz in einem Kraftfahrzeug kann so auch während der Fahrt das Reduktionsmittel im Innenbehälter aufgetaut werden.

Die Energieversorgung für das zweite Heizelement ist vorzugsweise unabhängig von der Verbrennungskraftmaschine. Alternativ oder zusätzlich ist es selbstverständlich auch möglich, dass die Energie für das zweite Heizelement von der Verbrennungskraftmaschine zur Verfügung gestellt wird. Da jedoch eine große Energiemenge benötigt wird, um das Reduktionsmittel im Außenbehälter aufzutauen, ist eine externe Energieversorgung bevorzugt. Eine solche externe Energieversorgung erfolgt zum Beispiel über eine externe Spannungsquelle, z.B. eine Steckdose. An einer Steckdose, an der z.B. in Europa elektrischer Strom mit einer Spannung von 230 V entnommen werden kann, kann eine größere Energiemenge zur Verfügung gestellt werden als durch die Verbrennungskraftmaschine, die im allgemeinen lediglich eine Spannung von 12 oder 24 V bereitstellt. Durch die größere Energie, die durch die externe Spannungsquelle bereitgestellt wird, ist ein schnelleres Auftauen des Reduktionsmittels möglich.

Anstelle eines elektrisch betätigten ersten Heizelementes und zweiten Heizelementes ist es auch möglich, dass das erste Heizelement und/oder das zweite Heizelement als Wärmetauscher ausgebildet sind. So ist es z.B. möglich, dass das erste Heizelement als Rohrschlange im Innenbehälter aufgenommen ist. Die Rohrschlange wird dann z.B. vom Kühlwasser der Verbrennungskraftmaschine durchströmt. Das Kühlwasser gibt seine Wärme an das Reduktionsmittel im Innenbehälter ab und taut dieses so auf. Auch das zweite Heizelement kann z.B. als Wärmetauscher ausgebildet sein. Dieses wird dann z.B. ebenfalls durch das Kühlmittel der Verbrennungskraftmaschine durchströmt, andererseits ist es aber auch möglich, dass das Heizmedium über einen externen Heizmittelkreislauf zugeführt wird.

In einer bevorzugten Ausführungsform wird der Verbrauch an Reduktionsmittel in einem Steuergerät erfasst. Aus dem ermittelten Verbrauch wird der Zeitintervall bestimmt, in dem das zweite Heizelement zugeschaltet wird. Durch das Erfassen des Reduktionsmittelverbrauches in dem Steuergerät ist es möglich, dass rechtzeitig der Innenbehälter wieder befüllt wird, bevor dieser vollständig entleert ist. Auf diese Weise wird sichergestellt, dass beim Betrieb der Verbrennungskraftmaschine immer Reduktionsmittel zum Entfernen der Stickoxide aus dem Abgas der Verbrennungskraftmaschine zur Verfügung steht.

Die Erfindung betrifft weiterhin einen Tank zur Bevorratung des flüssigen Reduktionsmittels, insbesondere eines flüssigen Reduktionsmittels, mit dem Stickoxide aus Abgasen von Verbrennungskraftmaschinen zu Stickstoff und Wasser reduziert werden, wobei der Tank einen Außenbehälter umfasst, in dem ein Innenbehälter aufgenommen ist. Im Innenbehälter ist das erste Heizelement aufgenommen. Mit einer Entnahmevorrichtung kann das flüssige Reduktionsmittel aus dem Innenbehälter entnommen werden. Der Außenbehälter kann von einem zweiten Heizelement beheizt werden.

In einer bevorzugten Ausführungsform ist das zweite Heizelement am Boden des Außenbehälters angeordnet. Weiterhin ist es auch möglich, dass das zweite Heizelement im Bereich der Wände des Tanks angeordnet ist. Da jedoch die Flüssigkeit immer den Boden des Außenbehälters bedeckt, sofern in diesem noch Flüssigkeit enthalten ist, ist es bevorzugt, dass das zweite Heizelement am Boden des Außenbehälters angeordnet ist.

Um einen aus dem Stand der Technik bekannten Tank, in dem ein Innenbehälter aufgenommen ist, umrüsten zu können, ist es bevorzugt, dass das zweite Heizelement an der Außenseite des Außenbehälters angeordnet ist. Durch das Anbringen des zweiten Heizelementes an der Außenseite ist eine einfache Montage möglich, ohne dass der Tank verlegt werden muss. Weiterhin ist es so auch möglich, sowohl Tanks für gemäßigte Klimazonen, die das zweite Heizelement nicht benötigen als auch Tanks, die unter extremen Klimabedingungen betrieben werden, in einer gemeinsamen Produktionslinie herzustellen, wobei bei den Tanks, die unter extremen Klimabedingungen eingesetzt werden am Ende das zweite Heizelement befestigt wird.

Um das Erstarren des Reduktionsmittels zu verzögern, ist es bevorzugt, dass der Außenbehälter von einer thermischen Isolierung umschlossen ist. Dabei ist die thermische Isolierung vorzugsweise so angebracht, dass diese auch das zweite Heizelement umschließt. Das zweite Heizelement ist somit zwischen dem Außenbehälter und der thermischen Isolierung angeordnet.

Damit flüssiges Reduktionsmittel nach dem Auftauen aus dem Außenbehälter in den Innenbehälter gefördert werden kann, ist der Tank vorzugsweise mit einer Fördervorrichtung versehen, die das Reduktionsmittel aus dem Außenbehälter in den Innenbehälter transportiert. Hierzu sind z.B. eine erste Entnahmeleitung, mit der Flüssigkeit aus dem Innenbehälter entnommen werden kann und eine zweite Entnahmeleitung, mit der Flüssigkeit aus dem Außenbehälter entnommen werden kann, mit einer Förderpumpe verbunden. Mithilfe der Förderpumpe wird das flüssige Reduktionsmittel über die erste Entnahmeleitung und die zweite Entnahmeleitung aus dem Innenbehälter bzw. dem Außenbehälter gesaugt. Vorzugsweise sind in der ersten Entnahmeleitung und in der zweiten Entnahmeleitung Drosselelemente ausgebildet. Die Drosselelemente sind dabei vorzugsweise so aufeinander abgestimmt, dass gleichzeitig aus dem Innenbehälter und aus dem Außenbehälter flüssiges Reduktionsmittel entnommen wird, wenn sowohl im Innenbehälter als auch im Außenbehälter flüssiges Reduktionsmittel enthalten ist. Um den Innenbehälter zu befüllen, wird aus dem Außenbehälter mehr Reduktionsmittel entnommen als aus dem Innenbehälter. Gleichzeitig ist die aus dem Außenbehälter entnommene Reduktionsmittelmenge auch größer als die Menge, die zur Reduktion der Stickstoffoxide benötigt wird. Das nicht benötigte Reduktionsmittel läuft über einen Rücklauf in den Innenbehälter zurück. Hierdurch wird der Innenbehälter aufgefüllt.

### Kurze Beschreibung der Zeichnungen

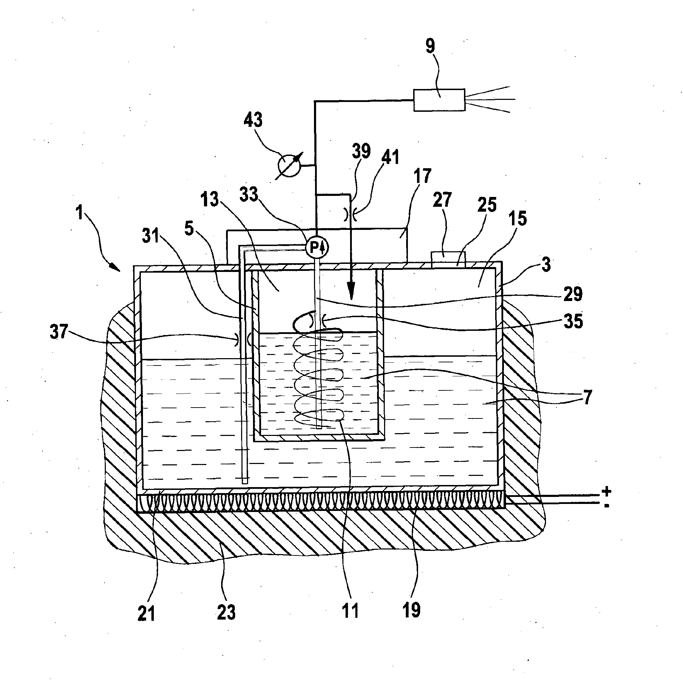

Eine Ausführungsform der Erfindung ist in der Zeichnung dargestellt und wird in der nachfolgenden Beschreibung näher erläutert.

Die einzige Figur zeigt einen erfindungsgemäß ausgebildeten Tank für ein Reduktionsmittel.

### Ausführungsformen der Erfindung

In der einzigen Figur ist ein Tank zur Bevorratung eines flüssigen Reduktionsmittels dargestellt.

Erfindungsgemäß umfasst ein Tank 1 zur Bevorratung eines flüssigen Reduktionsmittels einen Außenbehälter 3, in dem ein Innenbehälter 5 aufgenommen ist. Im Allgemeinen ist sowohl im Außenbehälter 3 als auch im Innenbehälter 5 ein flüssiges Reduktionsmittel 7 enthalten. Dieses ist z.B. eine wässrige Harnstofflösung, die als Reduktionsmittel eingesetzt wird, um Stickoxide in Stickstoff und Wasser zu reduzieren. Hierzu wird das flüssige Reduktionsmittel vor einem SCR-Katalysator (selective catalytic reduction) in ein Abgasrohr einer Verbrennungskraftmaschine eingespritzt. Das Einspritzen des flüssigen Reduktionsmittels erfolgt z.B. über ein Dosierventil 9. Im heißen Abgas der Verbrennungskraftmaschine verdampft das flüssige Reduktionsmittel und bildet Ammoniak, der sich im SCR-Katalysator einlagert. Der im Katalysator eingelagerte Ammoniak wandelt die im Abgas enthaltenen Stickoxide in elementaren Stickstoff und Wasserdampf um. Das flüssige Reduktionsmittel ist hierbei in einem erfindungsgemäß ausgebildeten Tank 1 bevorratet.

Zum Betrieb des SCR-Katalysators ist es erforderlich, dass das Reduktionsmittel als Flüssigkeit vorliegt. Da Flüssigkeiten jedoch die Eigenschaft aufweisen, bei Temperaturen, die unter dem Gefrierpunkt der Flüssigkeit liegen, zu erstarren, ist bei niedrigen Temperaturen ein Betrieb des SCR-Katalysators nicht mehr möglich. Der Erstarrungsvorgang bei Temperaturen unterhalb des Gefrierpunktes des Reduktionsmittels 7 beginnt im allgemeinen an den Wandungen des Außenbehälters 3 und zieht sich ins Innere des Außenbehälters 3 fort. Wenn als Reduktionsmittel 7 eine wässrige Harnstofflösung eingesetzt wird, erstarrt diese bei einer Temperatur im Bereich zwischen -11°C und -40°C. Die Erstarrungstemperatur hängt dabei davon ab, was für ein Frostschutzmittel dem Reduktionsmittel zugesetzt wurde oder wie viel Frostschutzmittel dem Reduktionsmittel 7 zugesetzt wurde. Damit das Reduktionsmittel 7 vollständig erstarrt, sind im Allgemeinen mehrer Tage erforderlich. Um die gesetzlichen Anforderungen an die Abgaszusammensetzung einhalten zu können, ist es jedoch erforderlich, dass auch bei vollständig erstarrtem flüssigem Reduktionsmittel eine Stickoxid-Reduktion im Abgas bereits kurze Zeit nach dem Starten der Verbrennungskraftmaschine durchgeführt wird. Hierzu ist es notwendig, das gefrorene Reduktionsmittel 7 schnell aufzutauen.

Da bei gleicher Heizleistung ein kleines Flüssigkeitsvolumen schneller aufgetaut ist als ein großes Flüssigkeitsvolumen, ist der Innenbehälter 5 beheizbar. Hierzu ist im Innenbehälter 5 ein erstes Heizelement 11 angeordnet. Das Heizelement 11 ist z.B. ein elektrisches Heizelement oder eine Heizschlange. Wenn das Heizelement 11 eine Heizschlange ist, wird diese vorzugsweise mit der Kühlflüssigkeit der Verbrennungskraftmaschine betrieben. Bevorzugt ist das Heizelement 11 jedoch ein elektrisch betriebenes Heizelement. Die Spannungsversorgung für das Heizelement 11 wird dann auch durch die Verbrennungskraftmaschine zur Verfügung gestellt, damit das Heizelement 11 auch bei Betrieb der Verbrennungskraftmaschine betrieben werden kann und nicht auf eine externe Spannungsversorgung angewiesen ist. Dies ist insbesondere dann erforderlich, wenn die Verbrennungskraftmaschine in einem Kraftfahrzeug eingesetzt wird.

Bei Betrieb der Verbrennungskraftmaschine in einem Kraftfahrzeug wird das Volumen des Innenbehälters 5 vorzugsweise so gewählt, dass das darin enthaltene Reduktionsmittel 7 für eine zurückzulegende Strecke von 1000 km ausreicht. Bei der Auslegung des Innenbehälters 5 ist hierbei darauf zu achten, dass dieser nicht vollständig mit dem Reduktionsmittel 7 befüllt werden kann. Das Reduktionsmittel 7 dehnt sich üblicherweise beim Gefrieren aus und vergrößert damit sein Volumen. Wenn der Innenbehälter 5 vollständig mit dem Reduktionsmittel 7 gefüllt wäre, würde dies zu einem Bersten des Innenbehälters 5 führen. Dies wird dadurch verhindert, dass oberhalb des Reduktionsmittels 7 ein Luftpolster 13 im Innenbehälter 5 enthalten ist. Beim Gefrieren des Reduktionsmittels 7 wird Luft aus dem Luftpolster 13 verdrängt. Das Luftpolster 13 verkleinert sich. Jedoch werden die Wandungen des Innenbehälters 5 durch das Gefrieren des Reduktionsmittels 7 nicht beschädigt.

Entsprechend befindet sich auch oberhalb des Reduktionsmittels 7 im Außenbehälter 3 ein Luftpolster 15. Beim Gefrieren des Reduktionsmittels 7 im Außenbehälter 3 verkleinert sich auch das Luftpolster 15 im Außenbehälter 3. Die Luft aus dem Luftpolster 15 wird verdrängt. Eine Beschädigung der Wandungen des Außenbehälters 3 wird vermieden.

Der Innenbehälter ist vorzugsweise zentral im Außenbehälter 3 angeordnet. Durch diese Anordnung des Innenbehälters 5 wird gewährleistet, dass das Reduktionsmittel 7 im Innenbehälter 5 zuletzt einfriert, da das Einfrieren des Reduktionsmittels 7 von außen nach innen erfolgt. Bis das Reduktionsmittel 7 im Innenbehälter 5 durchgefroren ist, sind somit zunächst mehrere Tage erforderlich, bei denen die Umgebungstemperatur unterhalb dem Gefrierpunkt des Reduktionsmittels 7 liegt.

Sobald das Reduktionsmittel 7 im Innenbehälter 5 durchgefroren ist, wird das erste Heizelement 11 betrieben. Vom ersten Heizelement 11 wird Wärme an das Reduktionsmittel 7 abgegeben und dieses taut auf. Der Auftauvorgang beginnt dabei in der direkten Umgebung um das erste Heizelement 11. Bei geeigneter Anordnung einer Entnahmevorrichtung im Innenbehälter 5 lässt sich flüssiges Reduktionsmittel entnehmen, sobald der Auftauvorgang begonnen hat. Hierzu ist die Entnahmevorrichtung in der Nähe des ersten Heizelementes 11 zu platzieren. Eine geeignete Entnahmevorrichtung ist z.B. ein Entnahmerohr, welches mit einer Förderpumpe verbunden ist. In der hier dargestellten Ausführungsform ist ein Fördermodul 17 oberhalb des Innenbehälters 5 an Außenbehälter 3 angebracht. Es ist jedoch auch möglich, dass zwischen dem Fördermodul 17 und der Außenwand des Außenbehälters 3 eine Leitung ausgebildet ist. Weiterhin ist es auch möglich, dass das Fördermodul 17 im Inneren des Tanks 1 angeordnet ist.

Sobald das Reduktionsmittel 7 aus dem Innenbehälter 5 verbraucht ist, ist es erforderlich, dass der Innenbehälter 5 wieder ausgefüllt wird. Dies erfolgt üblicherweise kontinuierlich mit dem im Außenbehälter 3 enthaltenen Reduktionsmittel 7. Wenn das Reduktionsmittel 7 im Außenbehälter 3 jedoch gefroren ist, ist ein Nachfüllen des Innenbehälters 5 zunächst nicht möglich. Zum Nachfüllen des Innenbehälters 5 ist es notwendig, das Reduktionsmittel 7 im Außenbehälter 3 aufzutauen. Sobald das Reduktionsmittel 7 im Innenbehälter 5 vollständig aufgetaut ist, wird auch in unmittelbarer Umgebung um den Innenbehälter 5 das Reduktionsmittel 7 im Außenbehälter 3 auftauen. Jedoch ist üblicherweise die Betriebsdauer der Verbrennungskraftmaschine nicht ausreichend, um das gesamte Reduktionsmittel im Außenbehälter 3 mit dem ersten Heizelement 11 aufzutauen. Erfindungsgemäß ist deshalb ein zweites Heizelement 19 vorgesehen, mit welchem das Reduktionsmittel 7 im Außenbehälter 3 aufgetaut werden kann. In der hier dargestellten Ausführungsform ist das Heizelement 19 am Boden 21 des Außenbehälters 3 angeordnet. Ein geeignetes zweites Heizelement 19 ist z.B. eine Heizmatte, die elektrisch beheizt werden kann. Mit der Heizmatte wird vorzugsweise der gesamte Boden 21 des Außenbehälters 3 bedeckt. Alternativ ist es auch möglich, z.B. im Inneren des Innenbehälters 5 eine Heizschlange vorzusehen. Auch wäre es möglich, die Heizmatte nicht außerhalb des Außenbehälters 3, sondern innerhalb des Außenbehälters 3 anzuordnen.

Die Energieversorgung des zweiten Heizelementes 19 erfolgt vorzugsweise elektrisch. Es ist jedoch auch möglich, das zweite Heizelement 19 z.B. als Heizschlange auszubilden, welche von einem flüssigen oder gasförmigen Heizmedium durchströmt wird. Bevorzugt erfolgt die Energieversorgung des zweiten Heizelementes 19 jedoch elektrisch. Dabei ist es einerseits möglich, dass die zum Betrieb des zweiten Heizelementes 19 erforderliche Energie von der Verbrennungskraftmaschine zur Verfügung gestellt wird. Andererseits ist es jedoch auch möglich, dass eine externe Energieversorgung verwendet wird. Bevorzugt wird das zweite Heizelement 19 mit einer externen Energieversorgung betrieben. Besonders bevorzugt ist es hierbei, das zweite Heizelement 19 mit einem Stecker zu versehen, der in eine Steckdose eingesteckt werden kann, wie sie in jedem Haushalt zu finden ist.

Sobald das Reduktionsmittel 7 im Außenbehälter 3 mit Hilfe des zweiten Heizelementes 19 aufgetaut ist, wird der Innenbehälter 5 wieder befüllt. Wenn die Umgebungstemperatur dann weiterhin unterhalb der Gefriertemperatur des Reduktionsmittels 7 liegt, ist erneut ein Betrieb der Verbrennungskraftmaschine möglich, bis das im Innenbehälter 5 enthaltene Reduktionsmittel 7 verbraucht ist. Daran anschließend ist es erneut erforderlich, das im Außenbehälter 3 enthaltene Reduktionsmittel 7 mit Hilfe des zweiten Heizelementes 19 aufzutauen, um den Innenbehälter 5 wieder zu befüllen.

Um ein sofortiges Gefrieren des Reduktionsmittels 7 im Außenbehälter 3 zu vermeiden, nachdem das zweite Heizelement 19 abgeschaltet wurde, ist der Tank 1 vorzugsweise von einer thermischen Isolierung 23 umschlossen. Als Material für die Isolierung 23 eignet sich dabei jedes herkömmliche, dem Fachmann bekannte Isoliermaterial. Derartige Isoliermaterialien sind z.B. handelsübliche Polymerschäume.

Wenn die Spannungsversorgung des zweiten Heizelementes 19 von der Verbrennungskraftmaschine bereitgestellt wird, ist es erforderlich, die Verbrennungskraftmaschine so lange zu betreiben, bis das Reduktionsmittel 7 im Außenbehälter 3 vollständig aufgetaut ist. Da das Reduktionsmittel 7 während des Betriebes der Verbrennungskraftmaschine verbraucht wird und sich somit der Füllstand des Reduktionsmittels 7 sowohl im Innenbehälter 5 als auch im Außenbehälter 3 verringert, ist es notwendig, von Zeit zu Zeit das Reduktionsmittel 7 nachzufüllen. Hierzu ist am Außenbehälter 3 eine Befüllöffnung 25 vorgesehen. Über die Befüllöffnung 25 lässt sich Reduktionsmittel in den Außenbehälter 3 einfüllen. Nach dem Einfüllen des Reduktionsmittels 7 in den Außenbehälter 3 wird die Befüllöffnung 25 mit einem Verschlussstopfen 27 verschlossen.

Um das Reduktionsmittel 7 aus dem Außenbehälter 3 in den Innenbehälter 5 zu transportieren, ist es z.B. möglich, im Außenbehälter 7 eine Entnahmeleitung vorzusehen, die mit dem Fördermodul 17 verbunden ist und in den Innenbehälter 5 mündet. Hierdurch lässt sich mit Hilfe des Fördermoduls 17 Reduktionsmittel 7 aus dem Außenbehälter 3 in den Innenbehälter 5 fördern.

Bevorzugt wird mit einer ersten Entnahmeleitung 29 Reduktionsmittel 7 aus dem Innenbehälter 5 entnommen und mit einer zweiten Entnahmeleitung 31 Reduktionsmittel 7 aus dem Außenbehälter 3. Die erste Entnahmeleitung 29 und die zweite Entnahmeleitung 31 sind mit einer Pumpe 33 verbunden, die vorzugsweise im Fördermodul 17 aufgenommen ist. Als Pumpe 33 eignet sich jede beliebige Pumpe, mit der eine Flüssigkeit gefördert werden kann. Bevorzugt ist die Pumpe 33 eine Membranpumpe.

In der ersten Entnahmeleitung 29 ist ein erstes Drosselelement 35 ausgebildet. Ein zweites Drosselelement 27 ist in der zweiten Entnahmeleitung 31 enthalten. Über die Drosselelemente 35, 37 sind die Entnahmeleitungen 29, 31 so aufeinander abgestimmt, dass das Reduktionsmittel 7 aus beiden Behälter 3, 5 entnommen wird. Das erste Drosselelement 35 und das zweite Drosselelement 37 sind dabei so ausgelegt, dass zum Befüllen des Innenbehälters 5 mehr Reduktionsmittel 7 aus dem Außenbehälter 3 entnommen wird als aus dem Innenbehälter 5. Die Gesamtmenge an entnommenem Reduktionsmittel ist größer als die Menge an Reduktionsmittel 7, die zur Reduktion der Stickstoffoxide benötigt wird. Das nicht benötigte Reduktionsmittel wird über einen Rücklauf 39 in den Innenbehälter 5 zurück geführt. Zur Einstellung des Rücklaufs ist im Rücklauf 39 ein drittes Drosselelement 41 aufgenommen. Die über das Dosierventil 9 abgegebene Menge an Reduktionsmittel wird über einen Drucksensor 43 ermittelt. Die von der Pumpe 33 geförderte Reduktionsmittelmenge, die nicht benötigt wird, wird über den Rücklauf 39 in den Innenbehälter 5 zurück geführt. Sobald die aus dem Außenbehälter 3 entnommene Reduktionsmittelmenge größer ist als die aus dem Innenbehälter 5 entnommene Reduktionsmittelmenge und die über das Dosierventil 9 abgegebene Reduktionsmittelmenge kleiner ist als die aus dem Außenbehälter 3 entnommene Reduktionsmittel, wird der Innenbehälter 5 befüllt. Um zu vermeiden, dass der Innenbehälter 5 überfüllt wird, ist im Innenbehälter 5 z.B. ein Füllstandsensor angeordnet. Sobald der maximale Füllstand im Innenbehälter 5 erreicht ist, wird vorzugsweise die Fördermenge der Pumpe 33 reduziert.

In einer bevorzugten Ausführungsform wird der Verbrauch an Reduktionsmittel 7 in einem Steuergerät erfasst. Durch den so erfassten Verbrauch an Reduktionsmittel 7 lässt sich das Zeitintervall bestimmen, in welchem das zweite Heizelement 19 betätigt werden muss, um das Reduktionsmittel 7 im Außenbehälter 3 aufzutauen, damit der Innenbehälter 5 wieder befüllt werden kann. Das Auftauen des Reduktionsmittels 7 im Außenbehälter 3 erfolgt vorzugsweise jeweils bevor der Innenbehälter 5 vollständig entleert ist. Hierdurch wird gewährleistet, dass eine kontinuierliche Abgasnachbehandlung während des Betriebs der Verbrennungskraftmaschinemöglich ist. Alternativ ist es auch möglich, am Innenbehälter 5 einen Füllstandssensor anzubringen, mit dem eine minimale Füllhöhe im Innenbehälter 5 erfasst wird. Sobald der Flüssigkeitsstand im Innenbehälter 5 unter den minimalen Füllstand sinkt, ist es erforderlich, das zweite Heizelement 19 zuzuschalten, um das Reduktionsmittel 7 im Außenbehälter 3 aufzutauen. Hierzu ist es einerseits möglich, den Betreiber der Verbrennungskraftmaschine zu benachrichtigen, dass ein Auftauen des flüssigen Reduktionsmittels 7 im Außenbehälter 3 erforderlich ist, andererseits ist es auch möglich, dass automatisiert das zweite Heizelement 19 zugeschaltet wird.

## Patentansprüche

1. Verfahren zum Betrieb einer Verbrennungskraftmaschine mit einer Vorrichtung, in welcher Stickoxide, die durch die Verbrennung von Kraftstoff in der Verbrennungskraftmaschine entstanden sind, in Gegenwart eines flüssigen Reduktionsmittels (7) zu Stickstoff und Wasser reduziert werden, wobei das flüssige Reduktionsmittel (7) in einem Tank (1), der einen Innenbehälter (5) und einen Außenbehälter (3) umfasst, bevorratet ist, und wenn das Reduktionsmittel (7) erstarrt ist, dieses im Innenbehälter (5) durch ein erstes Heizelement (11) geschmolzen wird, **dadurch gekennzeichnet, dass** das Reduktionsmittel (7) im Außenbehälter (3) in vorgegebenen Zeitintervallen durch ein zweites Heizelement (19) geschmolzen wird und der Innenbehälter (5) mit dem geschmolzenen Reduktionsmittel (7) aus dem Außenbehälter (3) befällt wird.

2. Verfahren nach Anspruch 1, **dadurch gekennzeichnet, dass** die Energie, die zum Betrieb des ersten Heizelementes (11) benötigt wird, durch die Verbrennungskraftmaschine bereitgestellt wird.

3. Verfahren nach Anspruch 1 oder 2, **dadurch gekennzeichnet, dass** die Energieversorgung für das zweite Heizelement (19) unabhängig von der Verbrennungskraftmaschine ist.

4. Verfahren nach Anspruch 1, **dadurch gekennzeichnet, dass** das erste Heizelement (11) und/oder das zweite Heizelement (19) elektrisch betrieben werden.

5. Verfahren nach einem der Ansprüche 1 bis 4, **dadurch gekennzeichnet, dass** der Verbrauch an Reduktionsmittel in einem Steuergerät erfasst wird und aus dem ermittelten Verbrauch der Zeitintervall bestimmt wird, in dem das zweite Heizelement (19) zugeschaltet wird.

6. Tank zur Bevorratung eines Reduktionsmittels (7), insbesondere eines flüssigen Reduktionsmittels, mit dem Stickoxide aus Abgasen von Verbrennungskraftmaschinen zu Stickstoff und Wasser reduziert werden, einen Außenbehälter (3) umfassend, in dem ein Innenbehälter (5) aufgenommen ist, wobei im Innenbehälter (5) ein erstes Heizelement (11) aufgenommen ist und mit einer Entnahmevorrichtung das flüssige Reduktionsmittel (7) aus dem Innenbehälter (5) entnommen werden kann, **dadurch gekennzeichnet, dass** der Außenbehälter (3) von einem zweiten Heizelement (19) beheizt werden kann.

7. Tank nach Anspruch 6, **dadurch gekennzeichnet, dass** das zweite Heizelement (19) am Boden (21) des Außenbehälters (3) angeordnet ist.

8. Tank nach Anspruch 6 oder 7, **dadurch gekennzeichnet, dass** das zweite Heizelement (19) an der Außenseite des Außenbehälters (3) angeordnet ist.

9. Tank nach einem der Ansprüche 6 bis 8, **dadurch gekennzeichnet, dass** die Energieversorgung für das zweite Heizelement (19) von der Energieversorgung für das erste Heizelement (11) unabhängig ist.

10. Tank nach einem der Ansprüche 6 bis 9, **dadurch gekennzeichnet, dass** der Außenbehälter (3) von einer thermischen Isolierung (23) umschlossen ist.

11. Tank nach einem der Ansprüche 6 bis 10, **dadurch gekennzeichnet, dass** flüssiges Reduktionsmittel (7) aus dem Außenbehälter (3) mittels einer Fördervorrichtung (17) in den Innenbehälter (5) gefördert werden kann.

## Claims

1. Method for operating an internal combustion engine having a device in which nitrogen oxides that have been generated by the combustion of fuel in the internal combustion engine are reduced, in the presence of a liquid reducing agent (7), to form nitrogen and water, wherein the liquid reducing agent (7) is stored in a tank (1) which comprises an inner container (5) and an outer container (3), and if the reducing agent (7) has solidified, said reducing agent is melted in the inner container (5) by means of a first heating element (11), **characterized in that** the reducing agent (7) in the outer container (3) is melted at predefined time intervals by means of a second heating element (19), and the inner container (5) is filled with the molten reducing agent (7) from the outer container (3).

2. Method according to Claim 1, **characterized in that** the energy required for the operation of the first heating element (11) is provided by the internal combustion engine.

3. Method according to Claim 1 or 2, **characterized in that** the energy supply for the second heating element (19) is independent of the internal combustion engine.

4. Method according to Claim 1, **characterized in that** the first heating element (11) and/or the second heating element (19) are electrically operated.

5. Method according to one of Claims 1 to 4, **characterized in that** the consumption of reducing agent is detected in a control unit, and the time interval in which the second heating element (19) is activated is determined from the detected consumption.

6. Tank for storing a reducing agent (7), in particular a liquid reducing agent, by means of which nitrogen oxides from exhaust gases of internal combustion engines are reduced to form nitrogen and water, comprising an outer container (3) in which an inner container (5) is accommodated, wherein a first heating element (11) is accommodated in the inner container (5) and the liquid reducing agent (7) can be extracted from the inner container (5) by means of an extraction device, **characterized in that** the outer container (3) can be heated by a second heating element (19).

7. Tank according to Claim 6, **characterized in that** the second heating element (19) is arranged on the base (21) of the outer container (3).

8. Tank according to Claim 6 or 7, **characterized in that** the second heating element (19) is arranged on the outside of the outer container (3).

9. Tank according to one of Claims 6 to 8, **characterized in that** the energy supply for the second heating element (19) is independent of the energy supply for the first heating element (11).

10. Tank according to one of Claims 6 to 9, **characterized in that** the outer container (3) is surrounded by thermal insulation (23).

11. Tank according to one of Claims 6 to 10, **characterized in that** liquid reducing agent (7) can be delivered from the outer container (3) into the inner container (5) by means of a delivery device (17).

## Revendications

1. Procédé pour faire fonctionner un moteur à combustion interne comprenant un dispositif dans lequel des oxydes d'azote produits par la combustion de carburant dans le moteur à combustion interne sont réduits en présence d'un agent réducteur fluide (7) pour former de l'azote et de l'eau, l'agent réducteur fluide (7) étant stocké dans un réservoir (1) qui comprend un récipient interne (5) et un récipient externe (3), et lorsque l'agent réducteur (7) est solidifié, celui-ci est fondu dans le récipient interne (5) par un premier élément chauffant (11), **caractérisé en ce que** l'agent réducteur (7) est fondu dans le récipient externe (3) à intervalles prédéfinis par un deuxième élément chauffant (19) et le récipient interne (5) est rempli avec l'agent réducteur fondu (7) provenant du récipient externe (3).

2. Procédé selon la revendication 1, **caractérisé en ce que** l'énergie nécessaire au fonctionnement du premier élément chauffant (11) est fournie par le moteur à combustion interne.

3. Procédé selon la revendication 1 ou 2, **caractérisé en ce que** l'alimentation en énergie pour le deuxième élément chauffant (19) est indépendante du moteur à combustion interne.

4. Procédé selon la revendication 1, **caractérisé en ce que** le premier élément chauffant (11) et/ou le deuxième élément chauffant (19) sont alimentés électriquement.

5. Procédé selon l'une quelconque des revendications 1 à 4, **caractérisé en ce que** la consommation en agent réducteur est détectée dans un appareil de commande et, à partir de la consommation détectée, l'intervalle de temps auquel le deuxième élément chauffant (19) est branché est déterminé.

6. Réservoir de stockage d'un agent réducteur (7), en particulier d'un agent réducteur fluide, avec lequel des oxydes d'azote provenant de gaz d'échappement de moteurs à combustion interne sont réduits pour former de l'azote et de l'eau, comprenant un récipient externe (3) dans lequel est reçu un récipient interne (5), un premier élément chauffant (11) étant reçu dans le récipient interne (5) et comprenant un dispositif de prélèvement qui peut prélever l'agent réducteur fluide (7) hors du récipient interne (5), **caractérisé en ce que** le récipient externe (3) peut être chauffé par un deuxième élément chauffant (19).

7. Réservoir selon la revendication 6, **caractérisé en ce que** le deuxième élément chauffant (19) est disposé au fond (21) du récipient externe (3).

8. Réservoir selon la revendication 6 ou 7, **caractérisé en ce que** le deuxième élément chauffant (19) est disposé du côté externe du récipient externe (3).

9. Réservoir selon l'une quelconque des revendications 6 à 8, **caractérisé en ce que** l'alimentation en énergie pour le deuxième élément chauffant (19) est indépendante de l'alimentation en énergie pour le premier élément chauffant (11).

10. Réservoir selon l'une quelconque des revendications 6 à 9, **caractérisé en ce que** le récipient externe (3) est entouré par une isolation thermique (23).

11. Réservoir selon l'une quelconque des revendications 6 à 10, **caractérisé en ce que** l'agent réducteur fluide (7) peut être transporté hors du récipient externe (3) dans le récipient interne (5) au moyen d'un dispositif de transport (17).
